# EUROPEAN PATENT SPECIFICATION

(11) **EP 2 830 739 B1**
(45) Date of publication and mention of the grant of the patent: **23.01.2019**
(21) Application number: 13722098.4
(22) Date of filing: 27.03.2013
(51) Int. Cl.: B01D 53/62

(54) **METHOD FOR CARBON DIOXIDE REMOVAL USING AMMONIA CONTAINING SOLVENT**
VERFAHREN ZUM ENTFERNEN VON KOHLENDIOXID MIT AMMONIAK-ENTHALTENDEM LÖSUNGSMITTEL
PROCÉDÉ POUR L'ÉLIMINATION DE DIOXYDE DE CARBONE AVEC SOLUTION CONTENANT DE L'AMMONIAQUE

(30) Priority: 30.03.2012 US 201261617720 P; 15.03.2013 US 201313834718
(43) Date of publication of application: 04.02.2015
(73) Proprietor: General Electric Technology GmbH, 5400 Baden (CH)
(72) Inventor: VITSE, Frederic, Knoxville, Tennessee 37921 (US); VERSTEEG, Geert, NL-7522PD Enschede (NL); HIWALE, Rameshwar Shamrao, Tulsa, OK 74137 (US)
(74) Representative: General Electric Technology GmbH
(86) International application number: PCT/IB2013/052475
(87) International publication number: WO 2013/144890

(56) References cited:
- US-A1- 2008 307 968
- US-A1- 2011 061 533
- US-A1- 2011 064 636
- US-A1- 2011 311 429
- US-A1- 2012 063 975

## Description

### TECHNICAL FIELD

The present disclosure is generally directed to the removal of carbon dioxide from a gas stream. More particularly, the present disclosure is directed to a system and method for precipitating ammonium salts as a means to separate a carbon dioxide rich phase from a carbon dioxide semi-lean phase and thus reduce the energy requirements during regeneration.

### BACKGROUND

Combustion of fossil fuels typically produces an exhaust gas stream (commonly referred to as a "flue gas stream") that contains contaminants, such as carbon dioxide (CO₂), sulfur oxides (SOx), nitrogen oxides (NOx), mercury, and carbon containing species, as well as particulate matter such as dust or fly ash. To meet requirements established under certain laws and protocols, plants that burn fossil fuels subject the resultant flue gas stream to various processes and systems to reduce or eliminate the amount of contaminants present in the flue gas stream prior to releasing the flue gas stream to the atmosphere.

In one example, carbon dioxide is removed from a gas stream by introducing the gas stream to an absorber column ("absorber"). In one embodiment, the gas stream contacts a solvent in a counter-current flow within the absorber. Contact between the solvent and the gas stream allows the solvent to absorb and thus remove the CO₂ from the gas stream. The gas stream that is substantially free of the CO₂ is typically sent to an exhaust stack while the CO₂ rich solvent is processed in a regenerator to remove the CO₂. The solvent from the regenerator is then cycled back to the absorber for further use.

When using reactive solvents, such as ammonia, for CO₂ removal, the solution reactions between the solvent(s) and the carbon dioxide may form a precipitate such as, for example, ammonium salts. When utilizing a chilled ammonia absorption process (often referred to as "CAP"), the process operates at a low temperature (typically below 20°C) and high CO₂ loadings to minimize ammonia volatility. High ammonia molarity and high recirculation rate (of the ammonia) around the absorber may be needed to achieve the desired CO₂ removal from the flue gas stream.

In addition to achieving the desired amount of CO₂ removal from the flue gas stream, it is also desirable to reduce ammonia loss. Reduction of ammonia loss involves low temperatures and low free ammonia molarity. Also, an ammonia solvent has the tendency to precipitate ammonium bicarbonate at high free ammonia molarity, low temperature, and high CO₂ loading, thus limiting the cyclic capacity of the solvent between the absorber and the regenerator. The consequence of this is that higher circulation rates are required between the absorber and regenerator to achieve the desired CO₂ capture rates.

US 2012/0063975 A1 discloses a method for removing carbon dioxide from a gas comprising introducing a carbon dioxide-containing gas stream to an absorber; contacting the gas stream with an ammonia-containing solvent, the ammonia-containing solvent having a molarity between about 0.5 molar and about 13 molar; and absorbing the carbon dioxide from the gas stream with the ammonia-containing solvent, thereby removing the carbon dioxide from the gas stream and forming a CO₂-rich stream. Similar methods are described in US 2008/0307968 A1 and US 2011/0311429 A1.

US 2011/0064636 A1 proposes a method for removing carbon dioxide from a gas. The absorber arrangement comprises three absorber columns. At the bottom of the first absorber column flue gas is introduced and ammoniated solution is discharged and cooled to create precipitates that are subsequently separated be means of a hydrocyclone. The separated precipitates are regenerated and fed back to the third absorber column. The solids free solution from the hydrocyclone is fed into the second absorber column.

US 2011/0061533 A1 proposes a method of removing CO₂ from a process gas, the method comprising: contacting an ammoniated solution with the process gas in an absorption arrangement, the ammoniated solution capturing at least a part of the CO₂ of the process gas, wherein the molar ratio R of ammonia to carbon dioxide in the ammoniated solution is controlled such that substantially no precipitation of solids occurs within the absorption arrangement; allowing ammoniated solution including captured CO₂ to exit the absorption arrangement; cooling the ammoniated solution that has exited the absorption arrangement, wherein at least a part of the captured CO₂ is precipitated as solid salt; separating at least a part of the precipitated salt from the ammoniated solution; heating the ammoniated solution from which the at least a part of the precipitated salt has been separated, such that substantially no solids are present in the heated ammoniated solution; and allowing the heated ammoniated solution to re-enter the absorption arrangement.

### SUMMARY

The present invention provides a method for removing carbon dioxide from a gas according to claim 1.

According to aspects illustrated herein, there is provided a method for removing carbon dioxide from a gas comprising introducing a carbon dioxide-containing gas stream to an absorber; contacting the gas stream with an ammonia-containing solvent, the ammonia-containing solvent having a molarity between about 0.5 molar and about 13 molar; and absorbing the carbon dioxide from the gas stream with the ammonia-containing solvent, thereby removing the carbon dioxide from the gas stream and forming a CO₂-rich stream.

According to further aspects illustrated herein, there is provided a method for removing carbon dioxide from a carbon dioxide-containing gas stream comprising introducing a carbon dioxide-containing gas stream to an absorber having a temperature of about 45°C or less; contacting the carbon dioxide-containing gas stream with an ammonia-containing solvent having a molarity between about 0.5 molar and about 13 molar; absorbing carbon dioxide from the gas stream; and forming a precipitate between the carbon dioxide and the ammonia-containing solvent.

In yet a further aspect illustrated herein, there is provided a system for removing carbon dioxide from a gas stream comprising an absorber configured to receive a carbon dioxide-containing gas stream and an ammonia-containing solvent, the ammonia-containing solvent having a molarity between about 0.5 molar and about 13 molar, the carbon dioxide-containing gas stream and the ammonia-containing solvent being contacted to remove carbon dioxide from the gas and form a carbon dioxide-rich stream; and a regenerator fluidly coupled to the absorber, wherein the regenerator is configured to receive at least a portion of the carbon dioxide-rich stream and to remove carbon dioxide from the carbon dioxide-rich stream to form a regenerated solvent to be introduced to the absorber for further absorption and removal of carbon dioxide.

The above described and other features are exemplified by the following figures and in the detailed description.

### BRIEF DESCRIPTION OF THE DRAWINGS

Referring now to the figures which are exemplary embodiments and wherein like elements are numbered alike:
FIG. 1 is a schematic depiction of a system for removal of carbon dioxide from a gas stream;
FIG. 2 is a graph illustrating carbon dioxide capture rate in a system according to an embodiment described herein;
FIG. 3 is a graph illustrating reboiler temperature and lean loading.

### Detailed Description

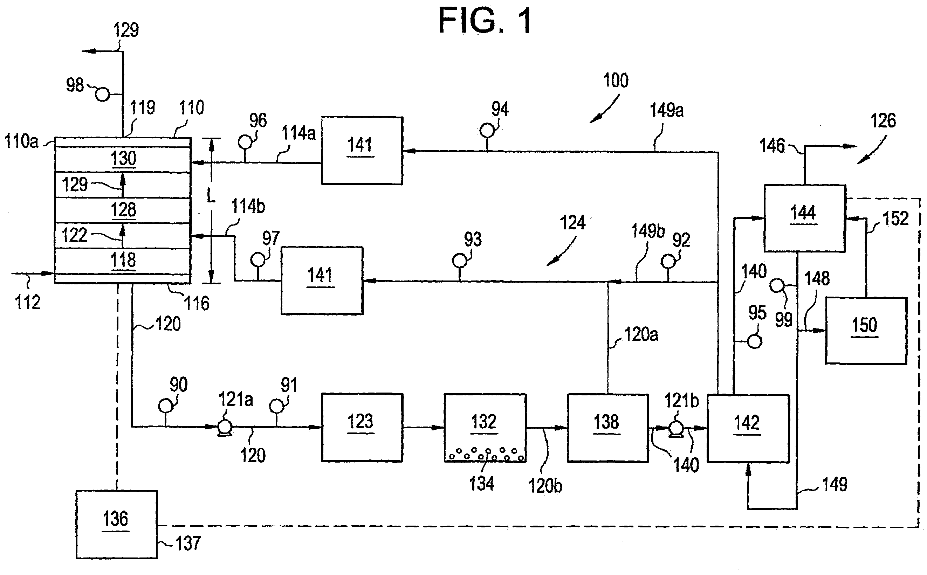

FIG. 1 illustrates a system 100 for removal of carbon dioxide (CO₂) from a gas stream. The system 100 includes a columnar absorber 110, wherein a CO₂-containing gas stream 112, such as, for example, a flue gas stream, is introduced and contacted with a solvent, such as CO₂-lean stream 114a and/or CO₂ semi-lean stream 114b. The CO₂-containing gas stream 112 may be contacted with the solvent 114a, 114b in a counter-current manner; however, it is contemplated that the CO₂-containing gas stream 112 may be contacted with the solvent 114a, 114b in any manner or direction that is desired in the system 100.

The CO₂-lean stream 114a and/or CO₂ semi-lean stream 114b are both ammonia-containing solvents that absorb CO₂ from the gas stream 112. The solvent 114a, 114b includes a low molarity ammonia having a molarity between about 0.5 molar to about 13 molar. In one embodiment, the molarity of the ammonia-containing solvent 114a, 114b is between about 0.5 molar to about 6 molar in the absorber 110.

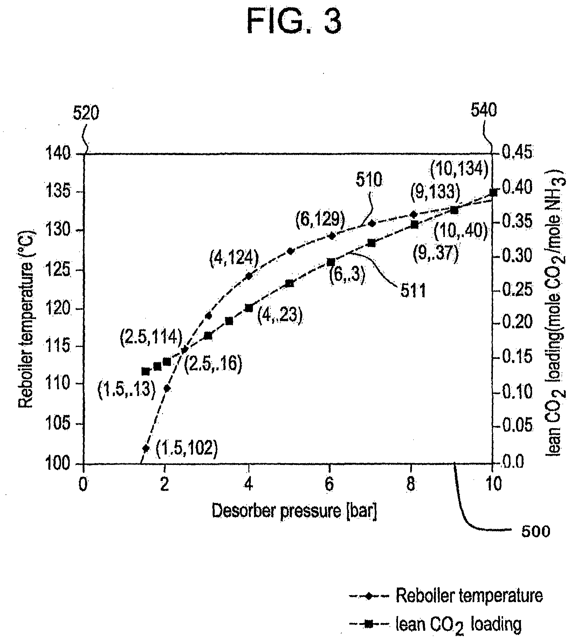

Using a solvent having low ammonia molarity reduces ammonia loss and the saturation concentration for CO₂ is increased and therefore, the ammonia-containing solvent can absorb more moles of CO₂ per mole of ammonia as compared to solvents having a higher molarity. In one embodiment, the ammonia-containing solvent 114a comprises a CO₂-lean stream and the ammonia-containing solvent 114b comprises a CO₂ semi-lean stream. As further described below with respect to absorption of CO₂ from the flue gas stream and regeneration of the ammonia-containing solvent, the CO₂-lean stream 114a comprises a regenerated solvent 149 that is cycled back to the absorber 110 after exiting a regenerator 144 wherein the regenerated solvent 149 is stripped of carbon dioxide. As further described below with reference to FIG. 3, the regenerated solvent 149, and thus the CO₂-lean stream 114a, exhibits lean CO₂ loading ranging from 0.00 to 0.45 moles of CO₂ / moles of ammonia. As further described below with reference to passing the flue gas stream to a precipitating means 132 and subsequently to a separation device 138, the CO₂ semi-lean stream 114b comprises a stream 120a that is extracted from the separation device 138 and is cycled back to the absorber 110 without passing through the regenerator 144.

In one embodiment, the ammonia-containing solvent, CO₂-lean stream 114a and/or CO₂ semi-lean stream 114b, also includes a catalyst in the form of an enzyme. In one embodiment, the enzyme is a metalloenzyme, such as, for example, carbonic anhydrase. In another embodiment, the catalyst is added to the ammonia-containing solvent, CO₂-lean stream 114a and/or CO₂ semi-lean stream 114b, to increase the total loading of the solution and/or favor the formation of a bicarbonate salt precipitate. In one embodiment, the absorber 110 is operated at a temperature of about 45°C or less. In another embodiment, the absorber 110 is operated in accordance with CAP, as described above, such that the temperature of the absorber 110 is about 20°C. It is contemplated that a top section 110a of the absorber 110 could be operated at a temperature of about 10°C or less.

As shown in FIG. 1, the gas stream 112 enters a bottom portion 116 of the absorber 110 and travels up a length L of the absorber 110 where it is contacted with the CO₂ semi-lean stream 114b in a first absorption section 118. The contact between the CO₂ semi-lean stream 114b and the gas stream 112 forms a stream 120 that is rich in CO₂ and ammonia (NH3), and a stream 122 containing reduced CO₂. The stream 120 is removed from the absorber 110 and a portion 120a of the stream 120 is recycled to the absorber 110 via a feedback loop 124 and introduced to the absorber 110 as the CO₂ semi-lean stream 114b, while the remaining portion of the stream 120 is provided as CO₂-enriched phase stream 140 to a regeneration system 126.

Meanwhile, in the absorber 110, the reduced CO₂ containing gas stream 122 continues to a second absorption section 128, where the reduced CO₂ containing gas stream 122 is contacted with CO₂-lean stream 114a. In the second absorption section 128, more CO₂ is absorbed from the gas stream to form a stream 129 that is substantially reduced in carbon dioxide content. In other embodiments, it is contemplated that the absorber 110 may have more than two absorption sections as illustrated. In yet another embodiment, the sections of the absorber 110 comprise more than one separate column or unit.

The stream 129 may be processed through one or more wash sections 130 in the absorber 110 prior to being emitted from the absorber 110 at an outlet 119. The molarity of ammonia present in the wash section 130 is between about 0 molar to about 3 molar. The stream 129 having a substantially reduced carbon dioxide content may be subjected to further processing in another portion of the system 100 or may be released to an environment.

The stream 120 is rich in CO₂ and NH3 as a result of the reaction between the CO₂ in the gas stream 112 and the CO₂-lean stream 114a and/or CO₂ semi-lean stream 114b in the absorber 110. In one embodiment, prior to being provided to the regeneration system 126, a first pressure of the stream 120 is elevated via a first pump 121A and subsequently the stream 120, having an elevated pressure or a second pressure, is cooled via a chiller 123 and provided to a precipitating means 132. In one embodiment, the precipitating means 132 is a crystallizer, which forms a precipitate 134. The precipitate 134 may be, for example, an ammonium salt. This speciation results in an enthalpy of regeneration that is about 15% lower according to equation 1 and 2:

CO₂(g) + NH₃(aq) + H₂0 = NH₄HCO₃(aq) ΔH = -64kJ/mol CO2 (1)

CO₂(g) + 2NH₃ = NH₂CO₂ NH₄ (aq) ΔH = -74kJ/mol CO2 (2)

As noted, the precipitate 134 may be, for example, an ammonium salt, and more particularly ammonium bicarbonate, carbamate and/or carbonate. The speciation of the three ammonium salts, bicarbonate, ammonium carbamate and carbonate, in an ammonia solution depends on several variables. It has previously been demonstrated that in an ammonia solution with constant molarity, such as, for example, 1.34mol/L, the speciation of bicarbonate will increase as the total of carbon content of the solution increases. A low molarity, highly-loaded ammonia solution favors the formation of ammonium bicarbonates over carbamates. It has further been demonstrated that at constant temperature, bicarbonate speciation decreases as a percent of total carbon anions in solution as ammonia molarity increases. Thus, at low ammonia molarity, a larger proportion of the ammonium bicarbonate salt precipitate 134 exists in the solution. Additionally, at low ammonia molarity, the desired capture rate of CO₂ can be achieved with appropriate sizing of the absorber 110.

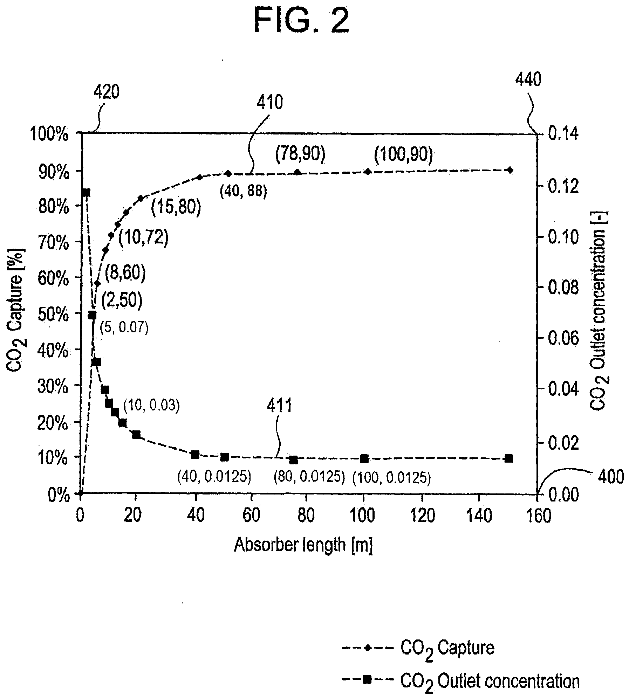

FIG. 2 illustrates that CO₂ capture rates of 85% or above are achieved having an absorber length of 30 meters, shown generally by a first plot 410, when the absorber 110 is run at a temperature of about 20°C. A 90% capture rate of CO₂ may be achieved upon the regulation of the temperature of the absorber 110 via a control system 136 in communication with the absorber 110 and the regeneration system 126 (FIG. 1). In one embodiment and as further shown in FIG. 1, the control system 136 comprises a controller 137 in communication with a plurality of devices 90-99 for measuring and selectively adjusting a plurality of operating parameters such as, for example, temperature, pressure, volumetric flow rate, molarity and mass concentrations of each stream of system 100. The devices 90-99 include, for example, sensors or other measurement devices, flow control valves, pumps and other flow control means. Such devices 90-99 are configured to transmit to, and receive from, the controller 137 one or more signals for operation of such devices, and the controller 137 is configured to receive and transmit multiple signals simultaneously, at elevated temperature ranges, and having a resistance to vibration, impact and electrical noise. While the control apparatus 136 is shown and described as comprising a controller 137, the present invention is not limited in this regard as the control apparatus 136 may comprise, for example, a Programmable Logic Controller ("PLC"), a distributed control systems ("DCS"), a computer or any type of microprocessor or like programmable control device having software installed therein, a server connected to one or more programmable devices, or any like controller without departing from the broader aspects of the invention. As used herein, the term "computer" encompasses desktops, laptops, tablets, handheld mobile devices, mobile phones and the like.

Referring to FIG. 2, the first plot 410 and a second plot 411 display the CO₂ capture rate in ammonia at 1.5M as a function of a length "L" of the absorber 110. The X axis 400 shows the absorber height L in meters. The first Y axis 420 shows % CO₂ capture. A second Y axis 440 shows CO₂ concentration at the outlet 119. The graph of FIG. 2 illustrates the following data points for plots 410 and 411, as summarized in Tables 1A and 1B below. Table 1A provides the CO₂ Capture rate as a function of packing height; and Table 1B provides the CO₂ outlet concentration as a function of packing height. The first plot 410 shows CO₂ capture approaching 80% at approximately 20m and approaching 90% at approximately 50m. Conversely, a curve 411 shows the concentration of CO₂ at the outlet of the absorber 110, which approaches 0.01 molar at approximately 40m.

**Table 1A**

| % CO₂ captured | Absorber length L in meters |
|---|---|
| 50% | 2m |
| 60% | 8m |
| 72% | 10m |
| 80% | 15m |
| 88% | 40m |
| 90% | 78m |
| 90% | 100m |

**Table 1B**

| CO₂ Outlet Concentration - Molar | Absorber length L in meters |
|---|---|
| 0.07 | 5m |
| 0.03 | 10m |
| 0.0125 | 40m |
| 0.0125 | 80m |
| 0.0125 | 100m |

Turning back to FIG. 1, after the precipitate 134 is formed, a stream 120b containing the precipitate 134 is provided to a separation device 138. The separation device 138 may be any type or kind of device that is capable of separating solids (*e.g.,* precipitate) from liquid (*e.g.* stream 120b), including but not limited to the separation device 138 being a cyclone.

The separation device 138 separates the portion 120a from the stream 120b containing the precipitate 134. The portion 120a of the stream 120 is recycled to the absorber 110 via the feedback loop 124. The separation device 138 provides a CO₂-enriched phase or stream 140 to the regeneration system 126. In one embodiment, prior to being provided to the regeneration system 126, a first pressure of the stream 140 is elevated via a second pump 121B and subsequently the stream 140, having an elevated pressure or a second pressure, is passed to the regeneration system 126. The CO₂-enriched phase, stream 140, including the precipitate, is provided to the regeneration system 126. In one embodiment as described above, the ammonia-containing solvent, CO₂-lean stream 114a and/or CO₂ semi-lean stream 114b, includes a catalyst in the form of an enzyme. As a result, the stream 120 that is removed from the absorber 110, cooled via the chiller 123, provided to the precipitating means 132, and subsequently provided to the separation device 138 as the stream 120b containing the precipitate 134 correspondingly includes the catalyst. The separation device 138 separates the portion 120a, including the catalyst, from the stream 120b containing the precipitate 134, and the portion 120a, including the catalyst, is recycled to the absorber 110 via the feedback loop 124.

As shown in FIG. 1, the CO₂-enriched phase stream 140 is provided to a heat exchanger 142 prior to being provided to a regenerator 144. In the regenerator 144, the CO₂-enriched phase stream 140 is stripped of carbon dioxide by breaking the chemical bond between the carbon dioxide and the solvent. The carbon dioxide is removed from the solvent by the introduction of heat to the regenerator 144. A reboiler 150 is provided to further process a regenerated solvent 149 exiting the regenerator 144. In one embodiment, the regenerator 144 is operated at a temperature of about 110°C. In another embodiment, the regenerator 144 operates at less than 100°C. It is contemplated that the temperature of the regenerator 144 and the reboiler 150 may be controlled via the control system 136.

Very high CO₂ loading is achievable when the ammonia-containing solvent 114a, 114b has a molarity between about 0.5 molar and 6 molar and the precipitate 134 is formed. This results in a high partial pressure of CO₂ in the stream 140, which enables regeneration to be conducted at a temperature as low as 115°C. In FIG. 3, a CO₂ rich loading of 0.8 molar has been reached and for a regeneration pressure of 2 bars, simulation shows that for a 90% CO₂ removal, temperatures as low as 115°C are suitable to regenerate the solvent. As the temperature of the regenerator 144 decreases, it is understood that CO₂ removal will be improved during the regeneration process.

Referring to FIG. 3, the plot shows the reboiler 150 temperature and lean solution CO₂ loading as a function of regenerator temperature when the ammonia concentration is at 1.5M and the rich loading is 0.8. The X axis 500 shows the pressure in the regenerator 144 ranging from 0 bars to 10 bars. The first Y axis 520 shows the reboiler 150 temperature in °C ranging from 100°C to 140°C. The second Y axis 540 shows lean CO₂ loading in moles of CO₂ / moles of ammonia ranging from 0.00 to 0.45 [mole CO₂/mole NH3]. The graph of FIG. 3 illustrates the following data points for a third plot 510 and a fourth plot 511, as summarized in Tables 2A and 2B below. Table 2A provides a reboiler temperature as a function of regenerator temperature; and Table 2B provides a lean CO₂ loading as a function of regenerator temperature The third plot 510 illustrates the reboiler 150 temperature increases as pressure increases, wherein at approximately 2 bars, the reboiler 150 temperature is about 114°C and at approximately 10 bars the reboiler 150 temperature is about 134°C. The fourth plot 511 illustrates the lean CO₂ loading increases as pressure increases, wherein at approximately 2 bar, the CO₂ loading is about 0.15 [mole CO₂/mole NH₃] and at approximately 10 bars, the CO₂ loading is about 0.40 [mole CO₂/mole NH₃].

**Table 2A**

| Regenerator pressure (bars) | Reboiler temperature |
|---|---|
| 1.5 bars | 102°C |
| 2.5 bars | 114°C |
| 4 bars | 124°C |
| 6 bars | 129°C |
| 9 bars | 133°C |
| 10 bars | 134°C |

**Table 2B**

| Regenerator pressure (bars) | Lean CO₂ loading |
|---|---|
| 1.5 bars | 0.13 mole CO₂/mole NH3 |
| 2.5 bars | 0.16 mole CO₂/mole NH₃ |
| 4 bars | 0.23 mole CO₂/mole NH₃ |
| 6 bars | 0.30 mole CO₂/mole NH₃ |
| 9 bars | 0.37 mole CO₂/mole NH₃ |
| 10 bars | 0.40 mole CO₂/mole NH₃ |

Referring back to FIG. 1, after being stripped from the solvent, the carbon dioxide is released from the regenerator 144 as a stream of carbon dioxide 146. In one embodiment, the stream of carbon dioxide 146 is sent to another section of the system 100 for further processing, storage or use, while the regenerated solvent 149 leaves the regenerator bottom via line 148. At least a portion of the regenerated solvent is passed to the reboiler 150 via the line 148. While not shown in FIG. 1, it is contemplated that the system 100 may include one or more pumps that facilitate the movement of the regenerated solvent 149 throughout the system.

In the reboiler 150, the regenerated solvent 149 is boiled to generate vapor 152, which is returned to the regenerator 144 to drive separation of carbon dioxide from the solvent. In addition, reboiling of the regenerated solvent 149 may provide further carbon dioxide removal from the regenerated solvent 149.

The regenerated solvent 149 is passed to the heat exchanger 142 for heat-exchanging with the CO₂-enriched phase stream140. Heat-exchanging allows for heat transfer between the solutions, resulting in a cooled regenerated solvent 149a and the heated CO₂-enriched phase stream 140. The regenerated solvent 149a is thereafter cycled to the next round of absorption in the absorber as the CO₂-lean stream 114a. It is contemplated that the regenerated solvent 149a may be cooled via one or more chillers 141 prior to being introduced to the absorber 110. In one embodiment, the regenerated solvent 149a is referred to as a first regenerated solvent 149a; and a second regenerated solvent 149b is extracted from the first regenerated solvent 149a. Thereafter, the second regenerated solvent 149b is cycled together with the portion 120a of the stream 120 to the absorber 110 via the feedback loop 124 as the CO₂ semi-lean stream 114b. In one embodiment, the controller 137 is configured to measure and selectively adjust the flow rate of at least one of the regenerated solvent 149a and the second regenerated solvent 149b to respectively adjust the CO₂-content of CO₂-lean stream 114a and/or the CO₂ semi-lean stream 114b.

The foregoing system and method provides increased efficiency of carbon dioxide capture and lower ammonia emission. Utilization of a lower molarity ammonia-containing solvent permits increased carbon dioxide loading, which reduces the number of wash sections 130 utilized in the absorber 110. Additionally, the utilization of a lower molarity solution will permit the regenerator 144 to operate at a lower pressure and lower temperature, which may contribute to efficiency and cost savings. These advantages, as well as others, are highlighted in the Examples included below:

### EXAMPLES

### Example 1: Comparison of Carbon Capture Utilizing Ammonia-Containing Solvents Having Different Molarities

At low ammonia molarity, a larger proportion of bicarbonate is formed and more of the bicarbonate can be dissolved in the solution. Data from a comparison of two cases having 90% CO₂ capture with high and low molarity ammonia solvent is provided in Table 3 below. The loss in cyclic capacity associated with the lower concentration of ammonia is partially compensated by the higher CO₂ loading as shown in Table 3. In such a case, the ammonia concentration is reduced by a factor of 5.48, yet the circulation rate in the absorber correspondingly increased by a factor of 3.64. The low molarity and relatively higher lean loading of CO₂ led to a reduction of ammonia loss in the absorber by a factor of 6.3.

**Table 3**

| | Case 1 | Case 2 | Ratio |
|---|---|---|---|
| NH₃ concentration (%wt) | 13.7 | 2.5 | 0.18 |
| Circulation rate (kg/hr) | 2.20E+06 | 8.00E+06 | 3.64 |
| Lean loading (mol/mol) | 0.3 | 0.39 | 1.30 |
| Rich loading (mol/mol) | 0.57 | 0.78 | 1.37 |
| Free ammonia (mol/L) | 5.6 | 0.9 | 0.16 |

### Example 2: Precipitation Formation

At a higher ammonia concentration solution, the high CO₂ loaded solution starts precipitating earlier as compared to lower molarity solution. An Ammonium Bicarbonate Solubility Index ("SI") at different NH3 Molarity is provided in Table 4 below. The data in Table 4 confirms precipitation can occur at 0.46 loading at 10M solutions at 4.4 °C whereas 0.66 loading is needed for 4M solutions to precipitate at 4.4° C.

**Table 4**

| Temper ature, C | NH₃ Molarity (M) | CO₂ loading | SI |
|---|---|---|---|
| 4.4 | 4 | 0.66 | 1 |
| | 10 | 0.46 | 1 |

### Example 3: Ammonia Emissions from an Absorber

Operating the system 100 at a lower ammonia molarity may reduce ammonia emissions from an absorption section 118, 128 to a wash section 130. In one embodiment, the absorber 110 may have three absorption sections. It has been demonstrated that as lean solution CO₂ loading increases, for example from about 0.23 to about 0.47, ammonia emissions decrease, for example approximately 35%.

### Example 4: Energy Consumption

The lower molarity ammonia-containing solution does not increase the amount of energy required to regenerate the solution 149 in the regenerator 144, and reduces the energy consumption in the absorber 110 because of the lower ammonia emissions from the absorption section to the wash section.

### Example 5: Overall Carbon Dioxide Capture Efficiency

The carbon dioxide removal efficiency may be reduced when using lower molarity ammonia-containing solvents at the same operating conditions at the same absorber bed height as compared to systems utilizing higher molarity solvents. However, low molarity solvents permit the system to operate at a higher temperature. Operation of the system at a higher temperature may improve kinetics, which in turn increases carbon dioxide capture efficiency. Operation at a higher temperature will also reduce the load needed to cool the absorber 110.

The various embodiments of the present invention described herein above provide a system and method for precipitating ammonium salts as a means to separate a CO₂-rich phase from a CO₂-semi-lean phase and thus reduce the energy requirements during regeneration. Such a system and method uses lower molarity ammonia (0.5-6 molar) with minimized ammonia losses to the gas overheads (up to an order of magnitude lower) and provides significant cyclic capacity while maintaining adequate adsorption kinetics in the absorber. The process takes advantage of precipitating ammonium salts post absorber and in a controlled manner by cooling the CO₂-rich solvent, therefore separating a CO₂-and-ammonia-rich phase, which is sent to the regenerator for an energy-efficient regeneration. The semi-lean phase is recirculated to the absorber to be enriched again above its low-temperature saturation point. Ammonia plays a dual role of an accelerator of the CO₂ absorption reaction in the liquid phase as well as a precipitating agent for the separation of the CO₂-rich phase from the CO₂-semi-lean phase. Since both ammonia and CO₂ are concentrated in the CO₂-rich phase, their partial pressures are higher and upon heating of the solution, regeneration of CO₂ at higher pressure can take place. Since ammonia is more volatile than water, significant regeneration can take place at relatively lower temperature (100°C or below) and higher pressure. Therefore, the process allows for lower temperature, higher pressure CO₂ regeneration with the ammonia as a main stripping agent. The ammonia loss to the gas phase is proportional to the liquid phase free ammonia (non-reacted ammonia) concentration. At lower molarity, the saturation concentration for CO₂ is significantly increased and much higher CO₂-rich loading can be reached.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or matter to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for removing carbon dioxide from a gas (112), the method comprising:
introducing a carbon dioxide-containing gas stream (112) at a bottom portion (116) of an absorber (110);
contacting the gas stream with an ammonia-containing solvent (114a, 114b) in the form of a CO₂-lean stream (114a) and a CO₂ semi-lean stream (114b), the ammonia-containing solvent having a molarity between 0.5 molar and 13 molar; and
absorbing the carbon dioxide from the gas stream (112) with the ammonia-containing solvent (114a, 114b), thereby removing the carbon dioxide from the gas stream (112) and forming a CO₂-rich stream (120), wherein the carbon dioxide-containing gas stream (112) travels up a length (L) of the absorber (110) where it is contacted with the CO₂ semi-lean stream (114b) in a first absorption section (118) and a reduced CO₂ containing gas stream (122) continues to a second absorption section (128), where the reduced CO₂ containing gas stream (122) is contacted with the CO₂-lean stream (114a);
passing the CO₂-rich stream (120) to a precipitating means (132) to form a precipitate in the CO₂-enriched stream and subsequently passing it to a separation device (138);
separating a portion (120a) of the CO₂-rich stream (120) in the separating means (138) and recycling this portion (120a) via a feedback loop (124) to the absorber (110) and introducing it to the absorber (110) as the CO₂ semi-lean stream (114b), while the remaining portion of the CO₂-rich stream (120) containing the precipitate (134) is provided as CO₂-enriched phase stream (140) to a regeneration system (126),
stripping the CO₂-enriched stream (140) of CO₂ in the regeneration system (126) and circulating the regenerated solvent (149) back to the absorber (110).

2. The method for removing carbon dioxide from a gas of claim 1, wherein the ammonia-containing solvent comprises a molarity of about 1.5 molar.

3. The method for removing carbon dioxide from a gas of claim 1, wherein the absorber is operated at a temperature of 45°C or less.

4. The method for removing carbon dioxide from a gas of claim 3, wherein the absorber (110) is operated at a temperature of about 20°C.

5. The method for removing carbon dioxide from a gas of claim 1, wherein the CO₂-lean stream (114a) and/or the CO₂ semi-lean stream (114b) further comprises a catalyst in the form of an enzyme.

6. The method for removing carbon dioxide from a gas of claim 5, comprising the step of cooling the CO₂ -rich stream (120) in a chiller (123) before passing it to the precipitating means (132) wherein the portion (120a) of the CO₂-rich stream (120) that is recycled back to the absorber (110) includes the catalyst.

7. The method for removing carbon dioxide from a gas of claim 1 or 5, comprising the step of providing the CO₂-enriched stream (140) to a heat exchanger (142) for heating prior to being provided to the regenerator (144) and providing the regenerated solvent (149) to the heat exchanger (142) for exchanging heat with the CO₂-enriched stream (140) before circulating it back to the absorber (110).

8. The method for removing carbon dioxide from a gas of claim 1, further comprising removing the CO₂-rich stream (120) from the absorber and forming a precipitate in the CO₂-rich stream (120).

9. The method for removing carbon dioxide from a gas of claim 8, wherein the precipitate is an ammonium salt.

10. The method for removing carbon dioxide from a gas of claim 1, further comprising:
providing the CO₂-enriched phase (140) to the regeneration system (126) for separating the carbon dioxide from the ammonia-containing solvent to form a carbon dioxide stream (146) and a regenerated solvent (149).

11. The method for removing carbon dioxide from a gas of claim 10, further comprising:
providing the regenerated solvent (149) to the absorber (110) as a CO₂ lean stream (114a).

## Patentansprüche

1. Verfahren zum Entfernen von Kohlenstoffdioxid aus einem Gas (112), wobei das Verfahren umfasst:
Einführen eines kohlenstoffdioxidhaltigen Gasstroms (112) an einem unteren Bereich (116) eines Absorbers (110);
Inkontaktbringen des Gasstroms mit einem ammoniakhaltigen Lösungsmittel (114a, 114b) in der Form eines CO₂-armen Stroms (114a) und eines CO₂-halb-armen Stroms (114b) wobei das ammoniakhaltige Lösungsmittel eine Molarität zwischen 0,5 molar und 13 molar aufweist; und
Absorbieren des Kohlenstoffdioxids aus dem Gasstrom (112) mit dem ammoniakhaltigen Lösungsmittel (114a, 114b), wodurch das Kohlenstoffdioxid aus dem Gasstrom (112) entfernt wird und ein CO₂-reicher Strom (120) gebildet wird, wobei der kohlenstoffdioxidhaltigen Gasstrom (112) um eine Länge (L) des Absorbers (110) herauf wandert, wo er in einer ersten Absorptionssektion (118) mit dem CO₂-halb-armen Strom (114b) in Kontakt gebracht wird, und ein reduzierter CO₂-haltiger Gasstrom (122) zu einer zweiten Absorptionssektion (128) fortläuft, wo der reduzierte CO₂-haltige Gasstrom (122) mit dem CO₂-armen Strom (114a) in Kontakt gebracht wird;
Weitergeben des CO₂-reichen Stroms (120) an ein Niederschlagsmittel (132), um einen Niederschlag in dem CO₂-angereicherten Strom zu bilden, und anschließend Weitergeben desselben an eine Abtrennvorrichtung (138);
Abtrennen eines Bereichs (120a) des CO₂-reichen Stroms (120) in dem Abtrennmittel (138), und Zurückführen dieses Bereichs (120a) mittels einer Rückführungsschleife (124) zu dem Absorber (110), und Einführen desselben in den Absorber (110) als der CO₂-halb-arme Strom (114b), während der verbleibende Bereich des CO₂-reichen Stroms (120), der den Niederschlag (134) enthält, als CO₂-angereicherter Phasenstrom (140) für ein Regenerationssystem (126) bereitgestellt wird,
Strippen des CO₂-angereicherten Stroms (140) von CO₂ in dem Regenerationssystem (126) und Zirkulieren des regenerierten Lösungsmittels (149) zurück zu dem Absorber (110).

2. Verfahren zum Entfernen von Kohlenstoffdioxid aus einem Gas nach Anspruch 1, wobei das ammoniakhaltige Lösungsmittel eine Molarität von etwa 1,5 molar aufweist.

3. Verfahren zum Entfernen von Kohlenstoffdioxid aus einem Gas nach Anspruch 1, wobei der Absorber bei einer Temperatur von 45° C oder weniger betrieben wird.

4. Verfahren zum Entfernen von Kohlenstoffdioxid aus einem Gas nach Anspruch 3, wobei der Absorber (110) bei einer Temperatur von etwa 20° C betrieben wird.

5. Verfahren zum Entfernen von Kohlenstoffdioxid aus einem Gas nach Anspruch 1, wobei der CO₂-arme Strom (114a) und/oder der CO₂-halb-arme Strom (114b) weiter einen Katalysator in Form eines Enzyms umfasst.

6. Verfahren zum Entfernen von Kohlenstoffdioxid aus einem Gas nach Anspruch 5, umfassend den Schritt des Kühlens des CO₂-reichen Stroms (120) in einem Abkühler (123), bevor er an das Niederschlagsmittel (132) weitergegeben wird, wobei der Bereich (120a) des CO₂-reichen Stroms (120), der zu dem Absorber (110) zurückgeführt wird, den Katalysator enthält.

7. Verfahren zum Entfernen von Kohlenstoffdioxid aus einem Gas nach Anspruch 1 oder 5, umfassend den Schritt des Bereitstellens des CO₂-angereicherten Stroms (140) für einen Wärmetauscher (142), um zu erwärmen, bevor er dem Regenerator (144) bereitgestellt wird, und Bereitstellen des regenerierten Lösungsmittels (149) für den Wärmetauscher (142), um Wärme mit dem des CO₂-angereicherten Strom (140) auszutauschen, bevor es zurück zu dem Absorber (110) zirkuliert wird.

8. Verfahren zum Entfernen von Kohlenstoffdioxid aus einem Gas nach Anspruch 1, weiter umfassend das Entfernen des CO₂-reichen Stroms (120) aus dem Absorber und Bilden eines Niederschlags in dem des CO₂-reichen Strom (120).

9. Verfahren zum Entfernen von Kohlenstoffdioxid aus einem Gas nach Anspruch 8, wobei der Niederschlag ein Ammoniumsalz ist.

10. Verfahren zum Entfernen von Kohlenstoffdioxid aus einem Gas nach Anspruch 1, weiter umfassend:
Bereitstellen der CO₂-angereicherten Phase (140) für das Regenerationssystem (126), um das Kohlenstoffdioxid aus von dem ammoniakhaltigen Lösungsmittel abzutrennen, um einen Kohlenstoffdioxidstrom (146) und ein regeneriertes Lösungsmittel (149) zu bilden.

11. Verfahren zum Entfernen von Kohlenstoffdioxid aus einem Gas nach Anspruch 10, weiter umfassend:
Bereitstellen des regenerierten Lösungsmittels (149) für den Absorber (110) als ein CO₂-armer Strom (114a).

## Revendications

1. Procédé pour l'élimination de dioxyde de carbone d'un gaz (112), le procédé comprenant :
l'introduction d'un flux de gaz contenant du dioxyde de carbone (112) à une portion inférieure (116) d'un absorbeur (110) ;
la mise en contact du flux de gaz avec un solvant contenant de l'ammoniaque (114a, 114b) sous la forme d'un flux pauvre en CO₂ (114a) et d'un flux semi-pauvre en CO₂ (114b), le solvant contenant de l'ammoniaque présentant une molarité entre 0,5 mole et 13 moles ; et
l'absorption du dioxyde de carbone du flux de gaz (112) avec le solvant contenant de l'ammoniaque (114a, 114b), en éliminant de ce fait le dioxyde de carbone du flux de gaz (112) et en formant un flux riche en CO₂ (120), dans lequel le flux de gaz contenant du dioxyde de carbone (112) se déplace vers le haut d'une longueur (L) de l'absorbeur (110) lorsqu'il est mis en contact avec le flux semi-pauvre en CO₂ (114b) dans une première section d'absorption (118) et un flux de gaz contenant une quantité réduite de CO₂ (122) continue jusqu'à une deuxième section d'absorption (128), où le flux de gaz contenant une quantité réduite de CO₂ (122) est mis en contact avec le flux pauvre en CO₂ (114a) ;
le passage du flux riche en CO₂ (120) à un moyen de précipitation (132) pour former un précipité dans le flux enrichi en CO₂ puis le passage de celui-ci à un dispositif de séparation (138) ;
la séparation d'une portion (120a) du flux riche en CO₂ (120) dans le moyen de séparation (138) et le recyclage de cette portion (120a) par l'intermédiaire d'une boucle de rétroaction (124) à l'absorbeur (110) et l'introduction de celle-ci dans l'absorbeur (110) en tant que le flux semi-pauvre en CO₂ (114b), alors que la portion restante du flux riche en CO₂ (120) contenant le précipité (134) est fournie en tant qu'un flux de phase enrichie en CO₂ (140) à un système de régénération (126),
le dépouillement du flux enrichi en CO₂ (140) du CO₂ dans le système de régénération (126) et la circulation du solvant régénéré (149) de retour vers l'absorbeur (110).

2. Procédé pour l'élimination de dioxyde de carbone d'un gaz selon la revendication 1, dans lequel le solvant contenant de l'ammoniaque comprend une molarité d'environ 1,5 mole.

3. Procédé pour l'élimination de dioxyde de carbone d'un gaz selon la revendication 1, dans lequel l'absorbeur est actionné à une température inférieure ou égale à 45 °C.

4. Procédé pour l'élimination de dioxyde de carbone d'un gaz selon la revendication 3, dans lequel l'absorbeur (110) est actionné à une température d'environ 20 °C.

5. Procédé pour l'élimination de dioxyde de carbone d'un gaz selon la revendication 1, dans lequel le flux pauvre en CO₂ (114a) et/ou le flux semi-pauvre en CO₂ (114b) comprennent en outre un catalyseur sous la forme d'une enzyme.

6. Procédé pour l'élimination de dioxyde de carbone d'un gaz selon la revendication 5, comprenant l'étape de refroidissement du flux riche en CO₂ (120) dans un refroidisseur (123) avant le passage de celui-ci au moyen de précipitation (132), dans lequel la portion (120a) du flux riche en CO₂ (120) qui est recyclée de retour vers l'absorbeur (110) inclut le catalyseur.

7. Procédé pour l'élimination de dioxyde de carbone d'un gaz selon la revendication 1 ou 5, comprenant l'étape de la fourniture du flux enrichi en CO2 (140) à un échangeur de chaleur (142) pour le chauffer avant de le fournir au régénérateur (144) et la fourniture du solvant régénéré (149) à l'échangeur de chaleur (142) pour échanger la chaleur avec le flux enrichi en CO₂ (140) avant de le faire circuler de retour vers l'absorbeur (110).

8. Procédé pour l'élimination de dioxyde de carbone d'un gaz selon la revendication 1, comprenant en outre l'élimination du flux riche en CO₂ (120) de l'absorbeur et la formation d'un précipité dans le flux riche en CO₂ (120).

9. Procédé pour l'élimination de dioxyde de carbone d'un gaz selon la revendication 8, dans lequel le précipité est un sel d'ammonium.

10. Procédé pour l'élimination de dioxyde de carbone d'un gaz selon la revendication 1, comprenant en outre :
la fourniture de la phase enrichie en CO₂ (140) au système de régénération (126) pour séparer le dioxyde de carbone du solvant contenant de l'ammoniaque afin de former un flux de dioxyde de carbone (146) et un solvant régénéré (149).

11. Procédé pour l'élimination de dioxyde de carbone d'un gaz selon la revendication 10, comprenant en outre :
la fourniture du solvant régénéré (149) à l'absorbeur (110) en tant qu'un flux pauvre en CO₂ (114a).
